(19) Europäisches Patentamt
European Patent Office
Office européen des brevets

(11) **EP 2 003 600 A2**

(12) **EUROPEAN PATENT APPLICATION**

(43) Date of publication:
**17.12.2008 Bulletin 2008/51**

(51) Int Cl.:
*G06K 9/38* (2006.01)      *G06K 9/40* (2006.01)
*G06K 9/48* (2006.01)      *G06K 9/32* (2006.01)

(21) Application number: **08005064.4**

(22) Date of filing: **18.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.06.2007   US 763000**

(71) Applicant: **Seiko Epson Corporation**
**Shinjuku-ku,**
**Tokyo 163-0811 (JP)**

(72) Inventors:
• **Yang, John Jinhwan**
**Toronto**
**Ontario M2K 3B9 (CA)**

• **Zhou, Hui**
**Toronto**
**Ontario M4J 1W9 (CA)**
• **Vafi, Narges**
**Richmond Hill**
**Ontario L4C 2P2 (CA)**
• **Achong, Jeffrey Matthew**
**Brampton**
**Ontario L6P 1X3 (CA)**

(74) Representative: **Grünecker, Kinkeldey,**
**Stockmair & Schwanhäusser**
**Anwaltssozietät**
**Leopoldstrasse 4**
**80802 München (DE)**

(54) **Method and apparatus for recognizing characters in a document image**

(57)    A method of recognizing characters in a document image comprises examining the intensity of pixels in the document image and identifying a peak intensity deemed to represent foreground in the document image. A threshold level for distinguishing the foreground from background in the document image as a function of the identified peak intensity is determined. The document image is thresholded using the threshold level to identify the foreground. Character recognition is performed on the foreground of the document image, based on edge orientations and edge magnitudes.

**FIG. 7**

**Description**

**Field of the Invention**

The present invention relates generally to image processing and in particular, to a method and apparatus for recognizing characters in a document image.

**Background of the Invention**

Marking documents with machine-readable characters to enable automatic document recognition using character recognition systems is well known in the art. For example, passports issued by government agencies, cheques issued by banks and other financial institutions, bills issued by utility and credit card companies and the like, have pre-printed information thereon that is intended to be electronically read when these documents are scanned and processed.

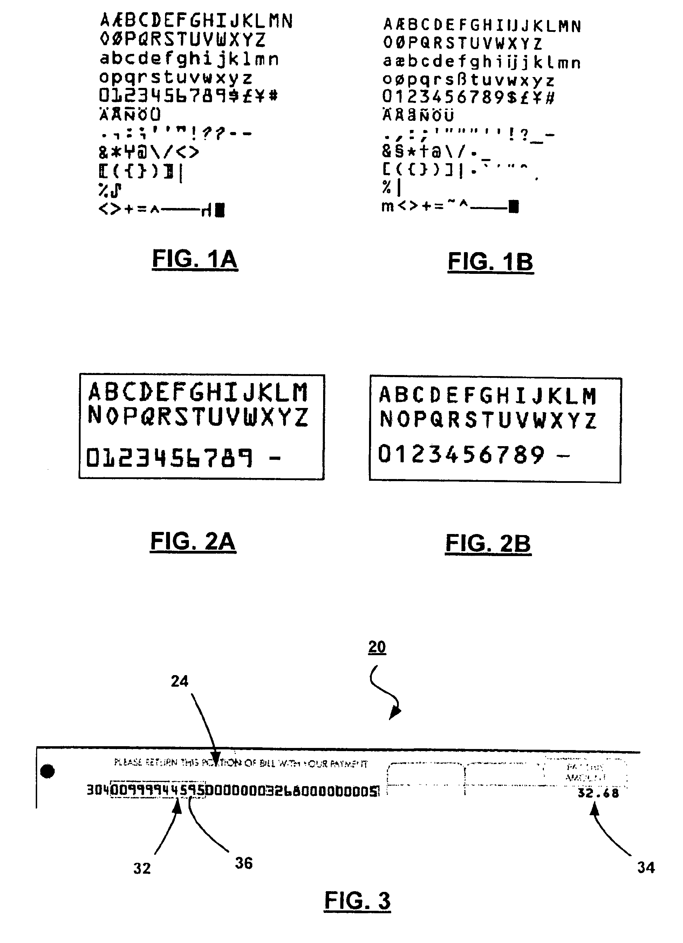

To facilitate character recognition, various character fonts have been specifically designed. For example, Figures 1A and 1B show OCR-A and OCR-B character sets respectively, that are commonly used when printing information on passports, cheques, utility and credit card bills etc. Figures 2A and 2B show subsets of the OCR-A and OCR-B character sets illustrated in Figures 1A and 1B. These character subsets are typically used to print account information on cheques and comprise ten (10) digits, twenty-six (26) alphabetical characters and a dash "-".

Figure 3 shows a portion of a cheque image 20 including a text region 24. As can be seen, the text region 24 is a horizontal strip adjacent the top of the cheque image 20. The text region 24 comprises account information 32 and an amount 34 printed with solid black magnetic ink using the OCR-A character subset illustrated in Figure 2A. A colored box 36 surrounds the account information 32.

Generally, during processing of a document with information thereon that is to be read electronically, the document is passed through a scanner and a digital document image is generated. The document image is then analyzed to identify and recognize candidate characters forming the information to be read. Prior to analysis, the document image is typically thresholded to generate a binary image. Unfortunately, if the document has other markings on it that are of another intensity or color, less-than-desirable results are often achieved during character recognition.

For some document images, it can be hard to distinguish between characters and other objects, such as colored boxes, surrounding the characters. If objects of this nature are not treated separately when thresholding the document image, a higher level of noise may result in the thresholded image. Therefore, it is important to threshold the document image so that the thresholded document image only includes characters where possible, in order to allow the characters to be recognized with a high degree of accuracy using a relatively low amount of processing.

A number of solutions have been proposed for recognizing characters in document images in situations where processing power and/or memory resources are limited. Many of these solutions, however, do not provide the desired level of speed and accuracy. One such common character recognition approach employs template matching and feature analysis. During template matching, each candidate character is compared to character templates belonging to one or more character sets. If there is significant overlap between the candidate character and a particular character template, the character template is selected. During feature analysis, strokes in the candidate character are compared to strokes in the selected character template in order to determine if there are sufficient similarities between the candidate character and the character template. If sufficient similarities exist, the candidate character is deemed to be classified or recognized as the character represented by the character template.

Other character recognition techniques have also been considered. For example, U.S. Patent No. 4,259,661 to Todd discloses a method and apparatus for recognizing characters. Initially, a character to be recognized is scanned to generate an analog signal. The analog signal is thresholded to generate a two-bit grayscale image. The threshold levels are scaled depending upon the peak brightness, which corresponds to the background. The grayscale image is then divided into twenty-five (25) subregions. The grayscale values for each sub-region are totaled and normalized to form corresponding sub-region densities that define components of a feature vector of a 25-dimensional orthogonal coordinate system. The length of the feature vector is then normalized and projected onto a set of predetermined subspaces comprising sets of eight (8) eigenvectors. Each class of characters to be recognized is represented by a set of eigenvectors. A predetermined algorithm based on the projections is used to recognize the character.

U.S. Patent No. 5,081,690 to Tan discloses a system for locating characters in a column. Upon identification of a first character, the system selects and examines a row of pixels below the identified character that is expected to be between characters. The system then determines whether the selected row contains less than a predetermined number of pixels whose grayscale values are above a sensitivity threshold. If so, the system decreases the grayscale value sensitivity threshold by a predetermined amount and repeats the process until either the number of pixels, whose grayscale values are above the sensitivity threshold, exceeds the predetermined number or a minimum threshold value is reached. The system then uses the determined sensitivity level to locate the top and bottom pixel rows of the next character in the column.

U.S. Patent No. 5,091,968 to Higgins et al. discloses a system and method for recognizing characters in an image using a plurality of predetermined character-identification patterns. The pattern for each character includes an actual pixel bitmap of the character, features of the character that do not change despite changes in the size of the character, and weightings for certain portions of the character to assist in further distinguishing similar characters from one another. During character recognition, a window is positioned over selected pixel values of the character such that the sum of the selected pixel values in the window is a maximum. The arithmetic mean of grayscale pixel values exceeding a threshold above the intensity of the image's background is determined. The arithmetic mean is used as a threshold to generate a binary image of the character. The binary image is then compared to each of the character-identification patterns until a matching pattern is found.

U.S. Patent No. 6,577,762 to Seeger et al. discloses a method of generating a background image of a pixmap image by computing a block average image of the pixmap image, a block variance image of the pixmap image and a variance threshold surface. The variance threshold surface is used to threshold the block variance image in order to segment the block average image into foreground and background regions. A background image of the pixmap image is then generated based upon the segmented foreground and background regions.

U.S. Patent No. 6,807,304 to Loce et al. discloses a method for feature recognition using loose-grayscale template matching. A target pixel is located in an input image and a window is designated that surrounds the target pixel so as to extract a defined portion of the image about the target pixel. Loose-grayscale templates corresponding to characters are matched to the defined portion of the input image within a threshold looseness interval. If a loose match is detected, the character corresponding to the matched loose-grayscale template is identified.

U.S. Patent No. 4,468,809 to Grabowski et al. discloses a character recognition system that captures analog image information and generates grayscale images therefrom. During generation of grayscale images, a scheme of fixed thresholds for classifying pixels as gray and black is manually selected and applied. Pixel patterns are analyzed within the grayscale images. Based on the color values of adjacent pixels, gray pixels are set as either foreground (black) or background (white), and some black pixels are set as white to generate a binary image. The binary image is then compared to character templates to determine which character the binary image is most likely to represent.

Although the above references disclose various methods of recognizing characters in a document image, improvements are desired. It is therefore an object of the present invention to provide a novel method and apparatus for recognizing characters in a document image.

Summary of the Invention

Accordingly, in one aspect there is provided a method of recognizing characters in a document image, comprising:

examining the intentisity of pixels in said document image;
identifying a peak intensity deemed to represent foreground in said document image;
determining a threshold level for distinguishing foreground from background in said document image as a function of said identified peak intensity;
thresholding said document image using said threshold level to identify said foreground; and
performing character recognition on said identified foreground.

In one embodiment, a valley intensity that follows the identified peak intensity is identified. In this case, the threshold level is calculated as a function of the identified peak intensity and the identified valley intensity. The identified peak intensity is used to determine a maximum value for the threshold level. The threshold level is set to the lesser of the identified valley intensity and the maximum value. An intensity histogram of the document image is generated during the examining. The intensity histogram is smoothed by, for example, applying a mean filter and the smoothed histogram is used to identify the peak and valley intensities.

The character recognition performing in one embodiment, comprises clustering proximate groups of pixels in the document image to form candidate characters. Each candidate character is compared to character templates representing recognizable characters and the candidate character is recognized when a match is deemed to occur. For each candidate character that is not recognized through template matching, neural network analysis is performed to recognize the candidate character. For each candidate character that is not recognized through neural network analysis, the results of character template matching and neural network analysis are compared to determine if the combined results enable the candidate character to be recognized. If the combined results of character template matching and neural network analysis do not result in the candidate character being recognized, the candidate character is further examined to determine if it represents a zero character.

In accordance with another aspect, there is provided an apparatus for recognizing characters in a document image, comprising:

an image analyzer examining the intensity of pixels in said document image and identifying a peak intensity deemed to represent foreground;

a thresholder determining a threshold level for distinguishing foreground from background in said document image as a function of said identified peak intensity, and thresholding said document image using said threshold level to identify said foreground; and

a character classifier performing character recognition on the foreground of said document image.

In accordance with yet another aspect, there is provided a computer-readable medium embodying a computer program for recognizing characters in a document image, said computer program comprising:

computer program code for examing the intensity of pixels in said document image;

computer program code for identifying a peak intensity deemed to represent foreground in said document image;

computer program code for determining a threshold level for distinguishing foreground from background in said document image as a function of said identified peak intensity;

computer program code for thresholding said document image using said threshold level to identify said foreground; and

computer program code for performing character recognition on said foreground of said document image.

In accordance with yet another aspect, there is provided a method of recognizing a candidate character in a document image, comprising:

determining edge orientations and edge magnitudes of pixels in regions encompassing pixels of said candidate character; and

analyzing said edge orientations and said edge magnitudes using a classification tool thereby to recognize said candidate character.

In one embodiment, the classification tool is a neural network. During the method, the pixels forming the candidate character are divided into regions. The edge orientations as well as the edge magnitudes within the regions arc aggregated prior to the analyzing. The edge orientations are determined using horizontal and vertical edge detectors.

In accordance with still yet another aspect, there is provided an apparatus for recognizing a candidate character in a document image, comprising:

an image analyzer determining edge orientations and edge magnitudes of pixels in regions encompassing pixels of said candidate character; and

a classification tool analyzing said edge orientations and said edge magnitudes in said document image thereby to recognize characters in said document image.

In accordance with still yet another aspect, there is provided a computer-readable medium including a computer program for recognizing a candidate character in a document image, said computer program comprising:

computer program code for determining edge orientations of pixels in windows surrounding pixels of said candidate character;

computer program code for determining edge magnitudes of pixels in windows surrounding pixels of said candidate character; and

computer program code for analyzing said edge orientations and said edge magnitudes using a classification tool thereby to recognize said candidate character.

The character recognition method and apparatus provide a fast and robust approach for recognizing characters in a document image. By using a threshold that is sensitive to peak intensities and valley intensities in the document image, characters can be recognized more rapidly and accurately. In this manner, objects other than characters can be disregarded in determining the threshold for distinguishing foreground and background, thereby reducing the amount of noise present in the thresholded image. Further, by analyzing edge orientations and magnitudes of pixels in regions surrounding pixels of candidate characters with a classification tool, character recognition can be performed rapidly.

**Brief Description of the Drawings**

An embodiment will now be described more fully with reference to the accompanying drawings in which:

Figures 1A and 1B show OCR-A and OCR-B character sets, respectively;

Figures 2A and 2B show subsets of the OCR-A and OCR-B character sets of Figures 1A and 1B;

Figure 3 shows a portion of a cheque image including a text region comprising a string of characters to be recognized;

Figure 4 is a schematic representation of an apparatus for recognizing characters in a document image;

Figure 5 is a flowchart showing the general character recognition method employed by the apparatus of Figure 4;

Figure 6 illustrates a number of replacement pixel patterns for filtering noise in a thresholded document image;

Figure 7 is a flowchart showing the steps performed during thresholding of the document image;

Figure 8 is an intensity histogram of the cheque image text region of Figure 3;

Figure 9 is a graph showing threshold limit versus the intensity of the first peak in the intensity histogram of Figure 8;

Figure 10 is a flowchart showing the steps performed during skew correction;

Figure 11 illustrates a rectangular foreground at different orientations and resulting Y-histograms;

Figures 12A to 12D illustrate the steps performed during character segmentation and classification;

Figure 13 illustrates the steps performed during character classification;

Figures 14A to 14C illustrate a sample character, a sample character template and matching of the sample character with the character template, respectively;

Figures 15A and 15B illustrate character templates for two similar characters and a template weighting selected to distinguish between the two similar characters;

Figures 16A and 16B illustrate horizontal and vertical Sobel edge detectors, respectively, used to detect edges in the document image; and

Figure 17 illustrates a pattern of pixels representing a "zero" candidate character.

## Detailed Description of the Embodiments

An apparatus, method and computer-readable medium embodying a computer program for recognizing characters in a document image is provided. During the method, the text region of a document image that includes information to be electronically read is thresholded to distinguish foreground (characters) from background (including color marks on the document) using a threshold level that is based on peaks and valleys in the intensities of the pixels in document image. Character recognition is then performed on the foreground. During character recognition, proximate groups of pixels are grouped to form candidate characters. Each candidate character is compared to character templates representing recognizable characters. If the candidate character is not matched to a character template with a desired level of confidence, a trained neural network is used to recognize the candidate character. If the candidate character is not matched with a desired level of confidence using the neural network, the results of character template matching and neural network analysis are compared. If the results of both character template matching and neural network analysis suggest that the candidate character is most likely a certain character, the candidate character is deemed to be recognized. If the candidate character is still not classified, the candidate character is further analyzed to determine if it is a zero character.

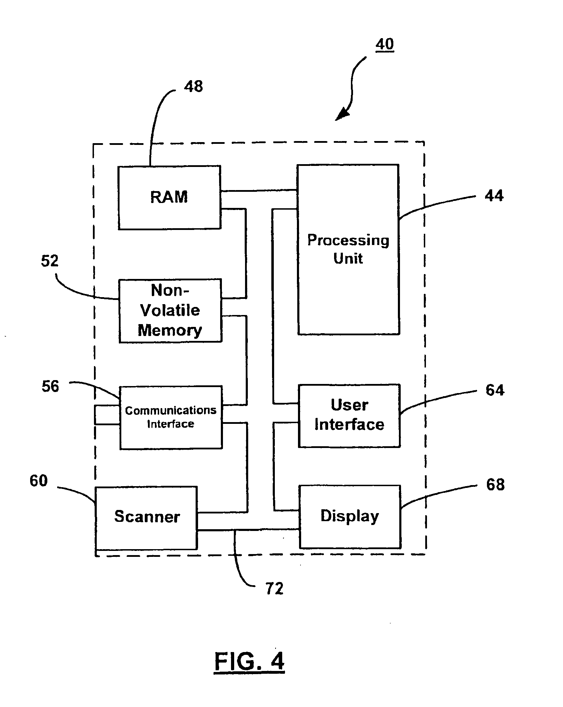

Turning now to Figure 4, an apparatus 40 for recognizing characters in a document image is shown. In this embodiment, the apparatus 40 recognizes characters printed on cheque images. As can be seen, the apparatus 40 comprises a processing unit 44, random access memory ("RAM") 48, non-volatile memory 52, a communications interface 56, a scanner 60, a user interface 64 and a display 68, all in communication over a local bus 72. The processing unit 44 retrieves a character recognition software application program from the non-volatile memory 52 into the RAM 48 and executes the character recognition application program when document images are to be processed to recognize characters printed thereon. The non-volatile memory 52 also stores character recognition results.

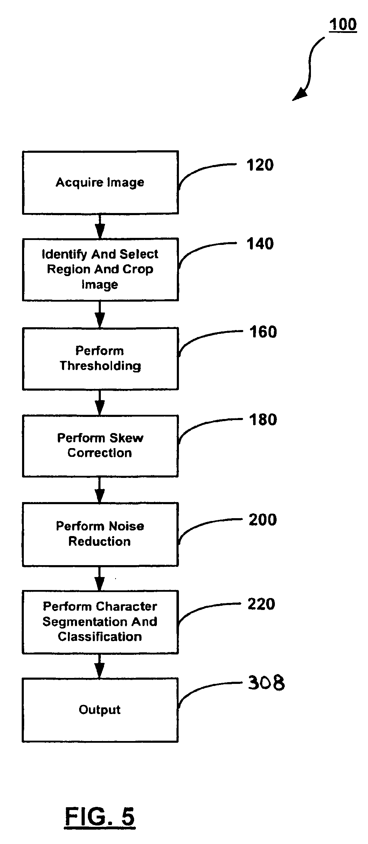

When a document such as a cheque is to be processed so that the information printed in the text region thereof can be electronically read, the cheque is passed through the scanner 60 and a grayscale document image is acquired (see step 120 in Figure 5). The document image is then presented on the display 68 and the user is prompted to identify and select the text region in the displayed document image that includes the text information to be recognized using the user interface 64. Once the user has selected the text region, the character recognition application program crops the document image to the text region (step 140). In this manner, the amount of image information that is processed during character recognition is reduced.

Once the document image has been cropped, the cropped document image is thresholded to distinguish foreground (i.e., black pixels) from background (i.e., white pixels or pixels of another light color) (step 160). During thresholding, the intensity of each pixel in the document image is examined and an intensity histogram is constructed. The first intensity peak of the intensity histogram is then detected together with the intensity valley that follows the first intensity peak. A threshold level between the first intensity peak and intensity valley is chosen to distinguish black print from colored or lighter print. The threshold level is generally set to a value equal to the intensity valley, as long as the intensity valley is within a desired distance from the first intensity peak. As some characters in the document image may be surrounded by a colored box, this threshold method treats the colored box as noise and eliminates it. As a result, most of the noise in the document image is eliminated based on the assumption that the image foreground and image background have a reasonable contrast.

Once the document image has been thresholded to identify the image foreground, skew correction is performed on the threshold document image to correct for skew that may have been introduced during the document scanning process (step 180). As will be appreciated, during scanning, the cheque may pass through the scanner 60 at a slight angle.

Once skew correction has been completed, noise reduction is performed (step 200). During noise reduction, three-by-three pixel regions of the document image are examined and compared to locator pixel patterns. Upon finding a three-by-three pixel region that corresponds to one of the locator pixel patterns, the three-by-three pixel region is replaced by a replacement pixel pattern associated with the matched locator pixel pattern.

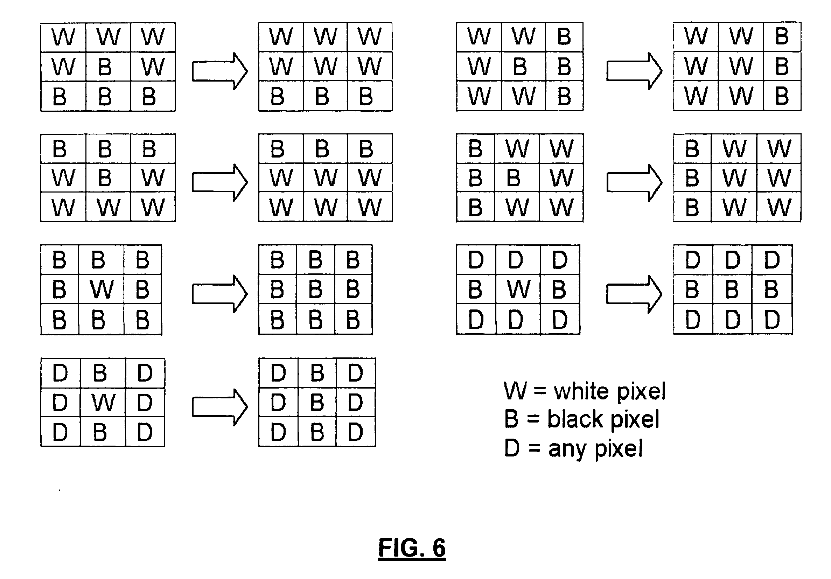

Figure 6 shows examples of locator pixel patterns and their associated replacement pixel patterns. In each locator pixel pattern, the central pixel is deemed to be noise. The associated replacement pixel pattern mirrors the locator pixel pattern, except that the foreground or background value of the central pixel is modified to remove the noise.

Once noise filtering has been completed at step 200, characters in the image foreground are segmented and classified (step 220). During character segmentation, the character string in the image foreground is separated into single characters for classification using a flood filling algorithm. As is known, the flood filling algorithm separates characters based on the connectivity of character pixels. Although this approach is accurate and efficient, it is possible that one or more characters may be fractured due to background noise. Since segmentation works based on the connectivity of foreground pixels, if a character is broken into multiple parts, each part will be treated as a segmented character, if only segmentation is employed, resulting in incorrect character recognition. Accordingly, to deal with this issue segmentation and classification are combined as will be described.

Once character segmentation and classification are complete, recognized characters, if any, are output to memory (step 308). The recognized characters can then be further processed or communicated to a downstream computing device via the communications interface 56.

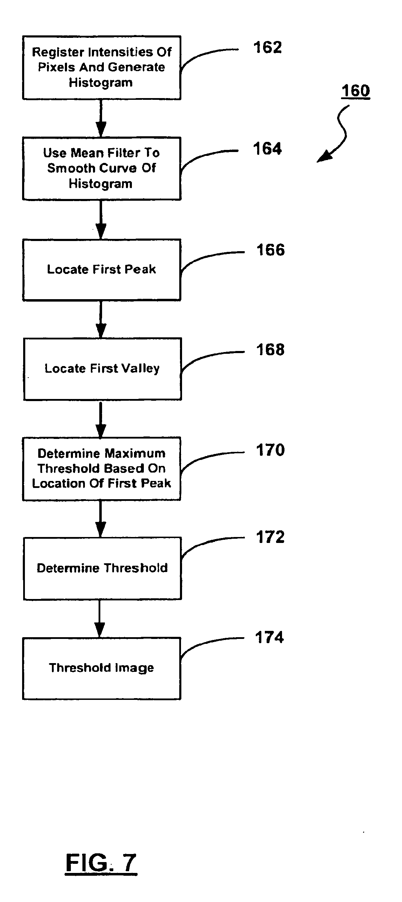

Figure 7 illustrates the steps performed during thresholding of the document image at step 160. Initially, the intensities of the pixels in the document image are examined and the intensity histogram is generated (step 162). A mean filter is then used to smooth the curve of the intensity histogram as the intensity histogram may have unwanted peaks and valleys due to sharp oscillations in the curve (step 164).

The intensity histogram is then examined starting at the lowest pixel intensity in order to locate the first intensity peak (step 166). Once the first intensity peak has been located, the first intensity peak is verified by analyzing a number of pixel intensity values following the peak to determine if these intensity values suggest the existence of sharp oscillations in the intensity histogram. Even after applying the mean filter, the intensity histogram may still have unwanted sharp oscillations. The verification is performed to ensure that the first intensity peak is not a part of such oscillations.

Once the first intensity peak has been located and verified, the intensity histogram is examined to detect the first intensity valley following the first intensity peak (step 168). Once the first intensity valley has been detected, the first intensity valley is verified in a manner similar to that described above.

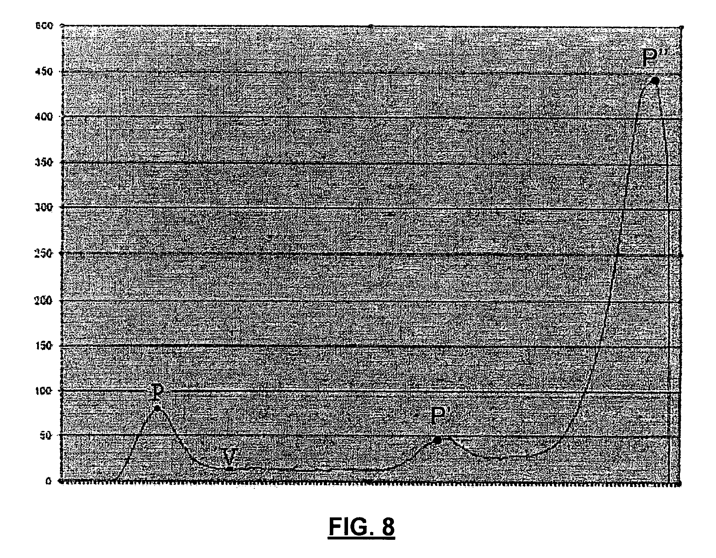

The intensity histogram of the cheque image of Figure 3 is shown in Figure 8. The intensity histogram is a smooth curve as a result of the mean filtering performed at step 164. The point $P$ marks the first intensity peak determined at step 166 that corresponds with black characters in the text region 24. The point V marks the first intensity valley determined at step 168. The point $P'$ marks a second intensity peak corresponding with the colored box 36 surrounding the account number 32. The point $P''$ marks a third intensity peak corresponding with the background of the cheque image.

After the first intensity valley has been located and verified, a maximum threshold value $V_{max}$ is determined (step 170) based on the location of the first intensity peak according to Equation 1 below:

$$V_{max} = 160 * (1 - exp(^{-P}/_{20})) \qquad (1)$$

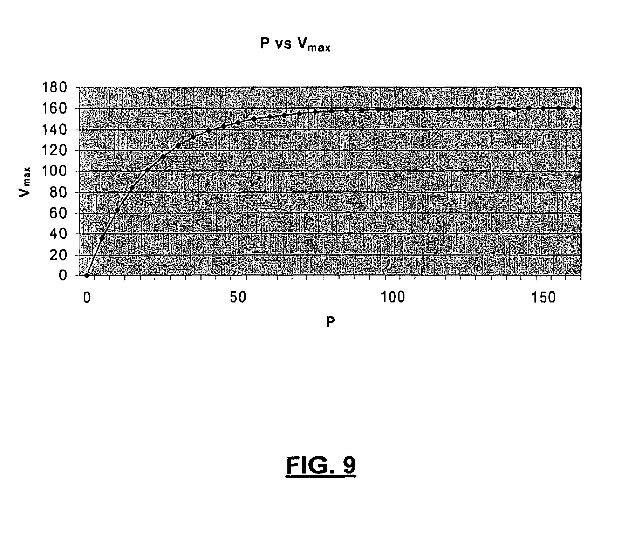

The relationship between the location of the first intensity peak and the maximum threshold value is shown in Figure 9. Once the maximum threshold value is determined, the threshold value for the document image is determined (step 172). In some instances, the first intensity valley may be much closer to the second intensity peak than to the first intensity peak. If this occurs and the threshold value is set to the intensity value of the first intensity valley, the threshold value may be too high, resulting in the thresholded document image containing unwanted noise and/or characters that are too thick. To inhibit this from occurring, the threshold value is determined to be the lesser of the first intensity valley determined at step 168 and the maximum threshold value determined at step 170.

Once the threshold value has been determined at step 172, the document image is thresholded to isolate the image foreground (step 174). As will be appreciated, this adaptive thresholding method is efficient in removing color noise, while maintaining important character information. The above thresholding method assumes that the intensity of the first intensity peak has a value less than one hundred and sixty (160). This assumption will not hold true if a blank document is scanned. In this case, the first intensity peak can be situated anywhere depending on the background color. Accordingly, if the intensity of the first intensity peak is not less than one-hundred and sixty (i.e. the assumption fails), the character recognition procedure is terminated.

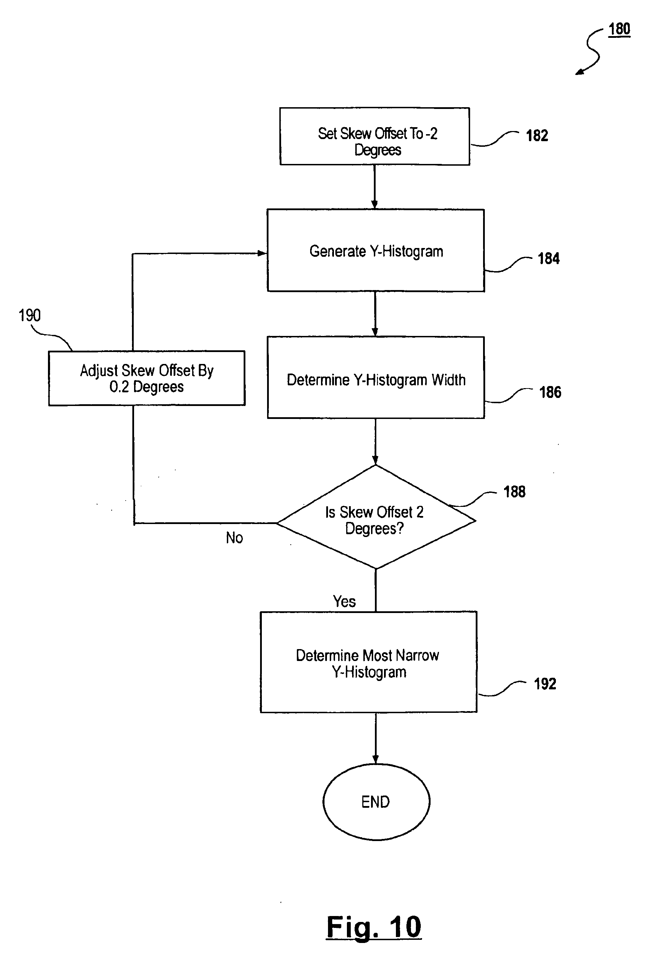

Figure 10 illustrates the steps performed during skew correction of the thresholded document image at step 180. As the difference between the correct orientation and the actual orientation of the document in the image is expected generally to be small, different document image orientations that are close to the expected orientation are analyzed to determine which orientation provides the most desirable result. Initially during skew correction, a skew offset is set to a value equal to -2 degrees (step 182). A Y-histogram of the document image oriented according to the skew offset is then generated (step 184). The Y-histogram provides a measure of the number of foreground and background pixels in each row of the thresholded document image. The width of the intensity peak is then determined for the Y-histogram and registered (step 186). The width of the intensity peak provides an indication of the orientation of the foreground pixels.

A check is then made to determine whether the skew offset is equal to 2 degrees (step 188). If the skew offset is not equal to 2 degrees, the skew offset is incremented by 0.2 degrees (step 190), after which the method returns to step 184. At step 188, if the skew offset is determined to be equal to 2 degrees, the registered intensity peak widths are examined to determine the Y-histogram having the most narrow intensity peak (step 192). The document image associated with this Y-histogram is deemed to be in the correct orientation.

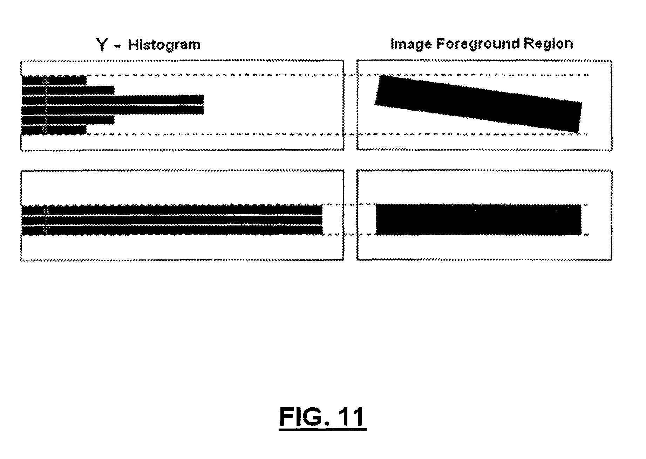

Figure 11 illustrates image foreground regions at two different orientations and their corresponding Y-histograms. As can be seen, the top image foreground region is rotated slightly with respect to the horizontal, whereas the bottom image foreground region is horizontally aligned. The intensity peak of the Y-histogram for the top image foreground region is wider in profile than that for the bottom image foreground region. It is assumed that the document image orientation that produces the narrowest Y-histogram intensity peak is the most horizontally aligned.

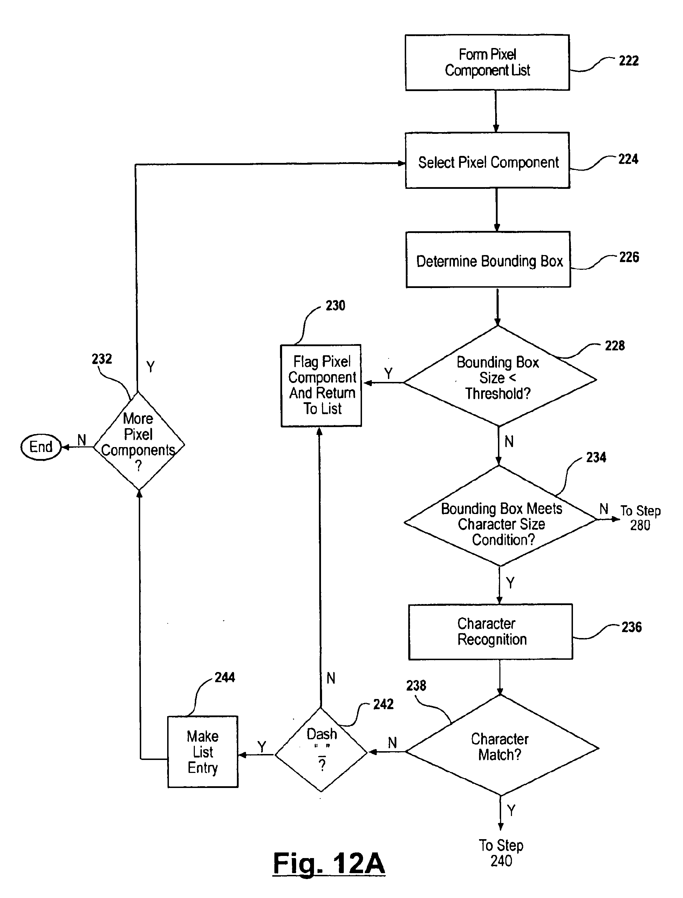

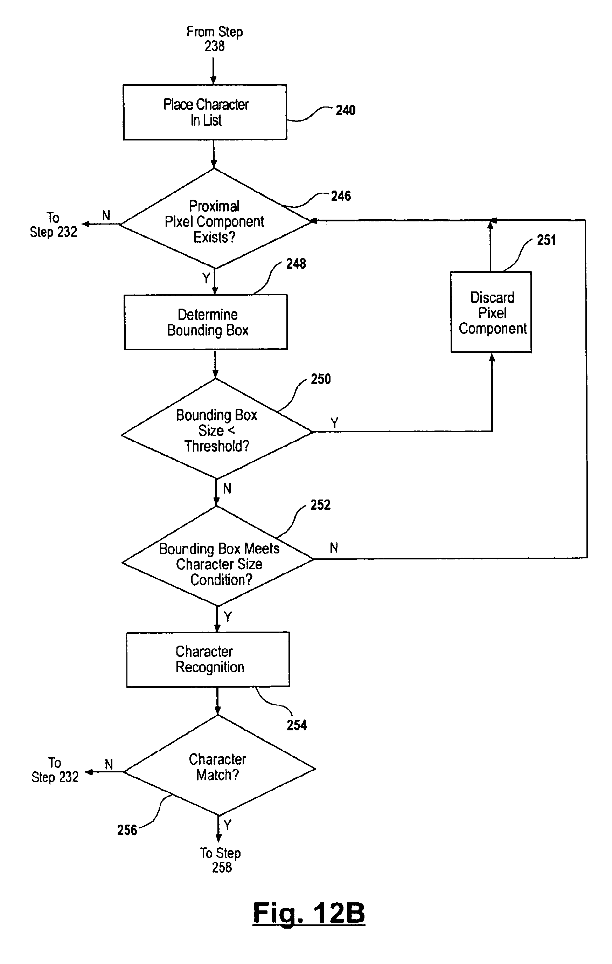

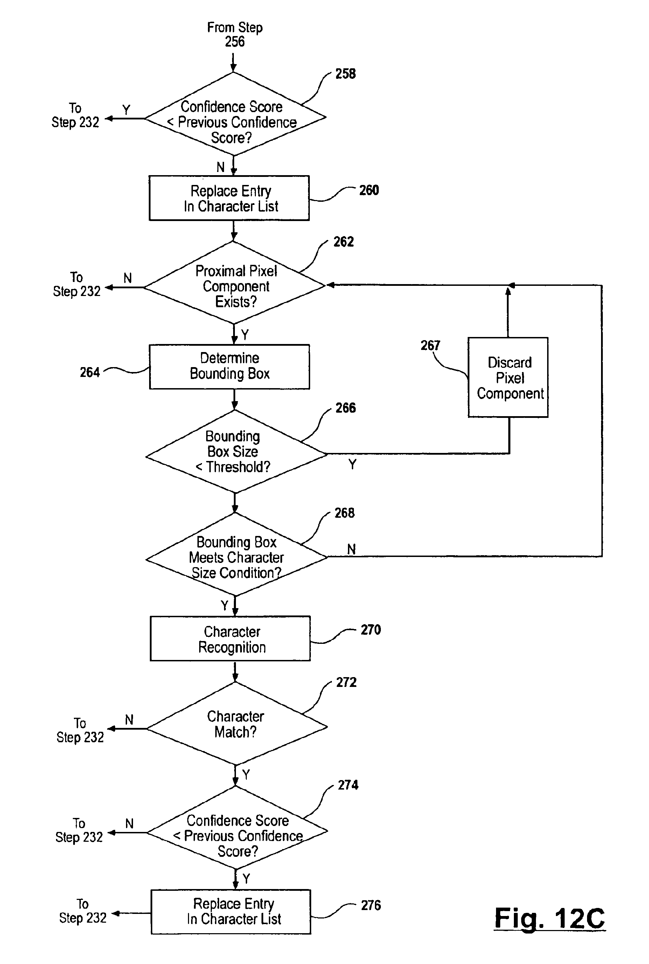

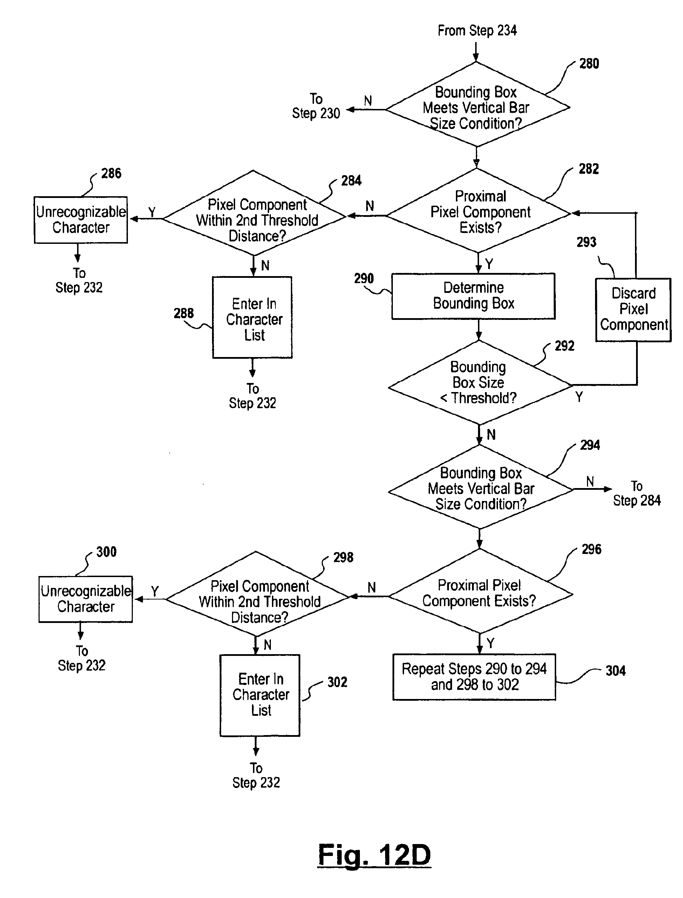

Figures 12A and 12D illustrate the steps performed during character segmentation and classification at step 220. Initially during character segmentation and classification, foreground pixels are grouped according to connectivity to form pixel components and the pixel components so formed, are entered in a pixel component list (step 222). In particular, if foreground pixels in the thresholded and oriented document image are connected along one of their four borders, the foreground pixels are grouped. Once the pixel component list has been formed, a first pixel component is selected and removed from the list (step 224). A bounding box surrounding the selected pixel component is then determined (step 226) and the size of the bounding box is examined to determine if it meets a noise threshold size (step 228). In this embodiment, the bounding box is examined to determine if the bounding box encompasses less than six (6) pixels. If so, the selected pixel component is deemed likely to be noise. In this case, the pixel component is flagged and returned to the list (step 230) and a check is made to determine if one or more non-flagged pixel components remain in the list (step 232). If so, the process reverts back to step 224 and the next non-flagged pixel component is selected and removed from the list. If no non-flagged pixel components remain in the list, the character segmentation and classification procedure ends.

At step 228 if the bounding box encompasses six (6) or more pixels, the height to width ratio of the bounding box is examined to determine if it satisfies a character size condition that is a function of the front of the characters to be recognized (step 234).

At step 234, if the height to width ratio signifies that the pixel component represents a candidate character, the pixel component is subjected to character recognition (236), as will be further described. If character recognition is successful, the character that the pixel component represents together with an associated confidence score arc returned. If character recognition is not successful, a no match result is returned. Once the result of character recognition is available, the character recognition result is examined (step 238). If the character recognition results in a match, the pixel component together with the character that the pixel component represents and the associated confidence score are placed in a character list (step 240). At step 238, if character recognition does not result in a match, the height to width ratio of the pixel component is examined to determine if the pixel component represents a dash "-" (step 242). If not, the pixel component is deemed likely to represent noise. In this case, the process reverts to step 230 where the pixel component is flagged and returned to the list. If the pixel component represents a dash, an entry is made in the character list (step 244) and the process reverts to step 232 to determine if any non-flagged pixel components remain in the pixel component list.

Following step 240, a check is made to determine if another non-flagged or flagged pixel component exists in the pixel component list that is within a threshold distance of the bounding box, in this case within three (3) pixels of the bounding box (step 246). If no such pixel component exists, the pixel component is deemed to be that character and the process reverts back to step 232 to determine if any non-flagged pixel components remain in the pixel component list.

At step 246, if a proximal pixel component exists, the proximal pixel component is selected and a bounding box surrounding the proximal pixel component is determined (step 248). A check is then made to determine if the size of the bounding box surrounding the proximal pixel component signifies that the proximal pixel component is noise (step 250). If so, the proximal pixel component is removed from the pixel component list and discarded (step 251) and the process reverts back to step 246. If the size of the bounding box surrounding the proximal pixel component signifies that the pixel component is not noise, a bounding box encompassing both pixel components is determined and a check is made to determine if the bounding box surrounding both pixel components has a height to width ratio within the range representing a candidate character (step 252). If not, the process reverts back to step 246. If the bounding box is within the range representing a candidate character, the pixel components arc treated as a single character (i.e. merged) and are subjected to character recognition (step 254). Once the result of character recognition is available, the result is examined (step 256). If the character recognition does not result in a match, the process reverts back to step 232 to determine if any non-flagged pixel components remain in the pixel component list.

At step 256, if the character recognition results in a match, the confidence score associated with the merged pixel components is compared with the confidence score associated with the pixel component selected at step 224 (step 258). If the confidence score associated with the merged pixel components is less than that associated with the pixel component selected at step 224, the original pixel component is retained in the character list and the process reverts back to step 232. If the confidence score associated with the merged pixel components is higher than that associated with the pixel component selected at step 224, the entry made in the character list at step 244 is replaced with an entry identifying the merged pixel components together with the character that the merged pixel components represent and associated confidence score (step 260). At the same time, the proximal pixel component that was merged with the original pixel component selected at step 224 is removed from the pixel component list.

Following step 260, a check is made to determine if yet another non-flagged or flagged pixel component exists in the pixel component list that is within the threshold distance of the bounding box surrounding the merged pixel components (step 262). If no such pixel component exists, the merged pixel components are deemed to be that character. The process then reverts back to step 232 to determine if any non-flagged pixel components remain in the list. At step 262, if such a proximal pixel component exists, the proximal pixel component is selected and a bounding box surrounded the proximal pixel component is determined (step 264). A check is then made to determine if the size of the bounding box surrounding the proximal pixel component signifies that the proximal pixel component is noise (step 266). If so, the proximal pixel component is removed from the pixel component list and discarded (step 267) and the process reverts back to step 262. If the size of the bounding box surrounding the proximal pixel component signifies that the pixel component is not noise, a bounding box encompassing the three (3) pixel components is determined and a check is then made to determine if the bounding box surrounding the three pixel components has a height to width ratio within the range representing a candidate character (step 268). If not, the process reverts back to step 262. If the bounding box is within the range representing a candidate character, the three pixel components are treated as a single character and are subjected to character recognition (step 270). Once the result of character recognition is available, the result is examined (step 272). If the character recognition does not result in a match, the process reverts back to step 232 to determine if any non-flagged pixel components remain in the pixel component list.

If the character recognition results in a match, the confidence score associated with the three (3) merged pixel components is compared with the confidence score associated with the two (2) merged pixel components (step 274). If the confidence score associated with the three (3) merged pixel components is less than that associated with the two (2) merged pixel components, the two (2) merged pixel components are retained in the character list and the process reverts back to step 232. If the confidence score associated with the three (3) merged pixel components is higher than that associated with the two (2) merged pixel components, the entry made in the character list at step 260 is replaced with an entry identifying the three (3) merged pixel components together with the character that the three merged pixel components represent and associated confidence score (step 276). At the same time, the proximal pixel component that was merged with the two proximal pixel components is removed from the pixel component list. The process then reverts back to step 232 to determine if any non-flagged pixel components remain in the pixel component list.

At step 234, if the bounding box does not satisfy the character size condition, the bounding box is examined to determine if it satisfies a second size condition (step 280). In particular, the height to width ratio of the bounding box is examined to determine if the ratio signifies that the pixel component represents a long vertical bar. If the pixel component does not represent a long vertical bar, the process reverts back to block 230 where the pixel component is discarded. If the pixel component is deemed to represent a long vertical bar, a check is made to determine if another non-flagged or flagged component exists in the pixel component list that is within the threshold distance of the bounding box (step 282). If no such proximal pixel component exists, a check is made to determine if another pixel component exists in the pixel component list that is within a second threshold distance of the bounding box (step 284). If so, the pixel component is deemed to be unrecognizable (step 286), in which case the process reverts back to step 232 to determine if any non-flagged pixel components remain in the pixel component list. Otherwise, the pixel component is deemed to represent the long vertical bar. In this case, an entry is made in the character list (step 288) and the process reverts back to step 232 to determine if any non-flagged pixel components remain in the pixel component list. As will be appreciated, step 284 requires a pixel component resembling a long vertical bar to be "significantly" spaced from other pixel components in order to be recognized as a long vertical bar.

At step 282, if a proximal pixel component exists, the pixel component is selected and a bounding box surrounding the pixel component is determined (step 290). A check is then made to determine if the size of the bounding box surrounding the proximal pixel component signifies that the pixel component is noise (step 292). If so, the pixel component is removed from the pixel component list and discarded and the process reverts back to step 282. If the size of the bounding box surrounding the proximal pixel component signifies that the proximal pixel component is not noise, the proximal pixel component is selected, a bounding box encompassing both pixel components is determined and a check is made to determine if the bounding box surrounding both pixel components has a height to width ratio signifying that the merged pixel components still represent a long vertical bar (step 294). If not, the process reverts back to step 284 and a check is made to determine if any non-flagged or flagged pixel components exist in the pixel component list that are within the second threshold distance of the pixel component selected at step 224.

At step 294, if the height to width ratio signifies that the merged pixel components still represent a long vertical bar, a check is made to determine if yet another proximal pixel component exists in the pixel component list that is within the threshold distance of the bounding box surrounding the merged pixel components (step 296). If not, a check is made to determine if any non-flagged or flagged pixel components exist in the pixel component list that are within the second threshold distance (step 298). If so, the merged pixel components are deemed to be unrecognizable (step 300). The pixel component selected at step 294 is in turn discarded and the process reverts to step 232. At step 298, if no pixel components within the second threshold distance exist, the merged pixel components are deemed to represent a long vertical bar. Accordingly, an entry is made in the character list (step 302), the pixel component selected at step 294 is removed from the pixel component list and the process reverts back to step 232.

At step 296, if another proximal pixel component exists, steps similar to steps 290 to 294 and 298 to 302 are performed (step 304) to determine if the three merged pixel components are unrecognizable or represent a long vertical bar. As will be appreciated, if the bounding box surrounding the three merged pixel components has a height to width ratio signifying that it does not represent a long vertical bar, steps similar to steps 298 to 302 are performed on the two pixel components that were merged at step 294. Thereafter, the process reverts back to step 232 to determine if any pixel components remain in the pixel component list.

During character recognition, the candidate character is normalized to a standard size of 24 by 16 pixels using the nearest-neighbor replication method. Once normalized, character classification is performed on the candidate character to determine if the candidate character resembles a recognizable character with a desired level of confidence. In this embodiment, two main classification techniques are employed, namely weighted template matching and classification tool analysis. Classification tool analysis is performed by a neural network that has been trained using a sample image set. The advantage of the template matching over classification tool analysis is its relatively low processing and memory requirements. The weighting parameters of the neural network occupy more memory space and, in addition, the analysis performed using neural networks takes more time.

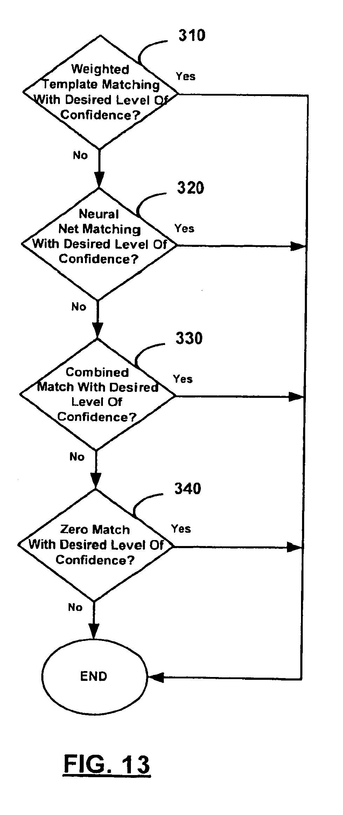

Figure 13 illustrates the steps performed during character classification. Initially it is first determined whether the candidate character can be classified as a recognizable character with a desired level of confidence using weighted template matching (step 310). In particular, the candidate character is compared to the character templates of a set representing characters that can be recognized. During comparing of the candidate character to a character template, each foreground pixel in the candidate character is compared to the weighting of a corresponding pixel in the character template. The character template with the highest similarity to the candidate character is determined and the amount of commonality between the candidate character and the most similar character template representing the degree of confidence is registered. If the degree of confidence is greater than or equal to a desired level of confidence, the candidate character is deemed to correspond to the character represented by the character template and character classification ends.

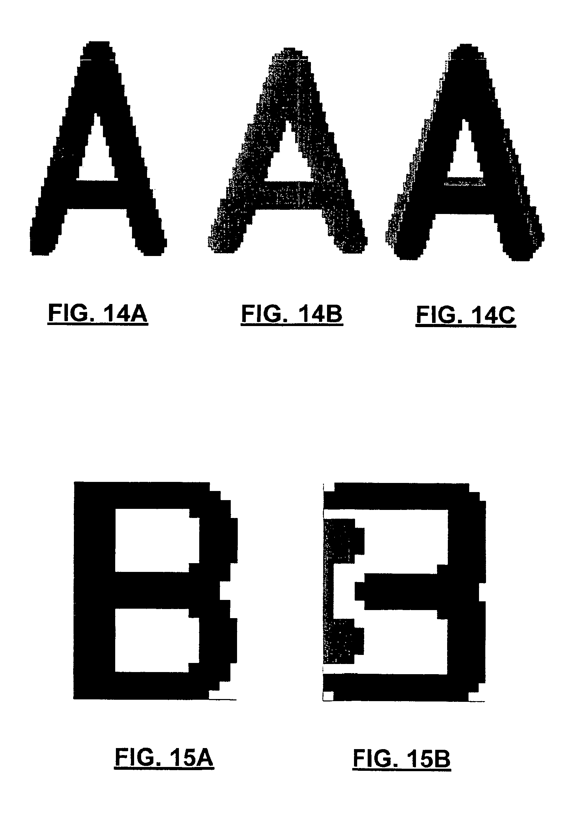

Figures 14A and 14B illustrate an exemplary candidate character and a character template, respectively, that are compared. The comparison is shown in Figure 14C. As can be seen, in this case the candidate character generally appears to match the character template.

Many character templates simply have a value of one (1) assigned to foreground pixels and a value of zero (0) assigned to background pixels. In order to inhibit misclassification of similar characters such as 'B' and '3', some character templates include a third weighting as shown in Figures 15A and 15B. In the character template for the number '3', the lighter color in the left side indicates a weighting of -1. As a result, if any of the corresponding pixels in the candidate character are foreground, the chance of matching is lowered, resulting in a lower confidence level. This is done to inhibit the letter 'B' from being recognized as the number '3'. Correspondingly, the character template for the letter 'B' is weighted more heavily in the same regions, using a weighting of two (2), in order to reduce the likelihood that the number '3' will be recognized as the letter 'B'.

If at step 310, the candidate character cannot be classified with the desired level of confidence, it is determined whether the candidate character can be matched using neural network analysis (step 320). During neural network analysis, the input for the neural network is the magnitude and orientation of edges in the candidate character. To provide this input, the candidate character is initially blurred using a small box filter and is then divided into sixteen (16) ($6\times4$) pixel blocks. The box filter smoothes the edges of the candidate character to reduce noise that may affect edge analysis.

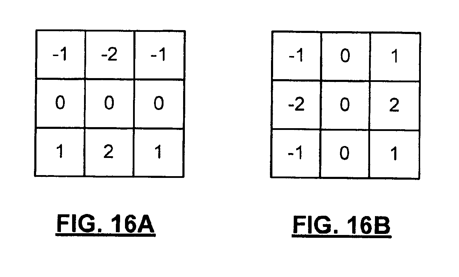

The edge orientations of the pixels within the pixel blocks are calculated by examining the binary pixel values (that is, black = 1 and white = 0) using Sobel edge detectors. Figures 16A and 16B show horizontal and vertical Sobel edge detectors respectively that are applied to the 3x3 region surrounding each pixel of the candidate character to determine edge orientation. The horizontal Sobel edge detector of Figure 16A generates relatively large negative values for edges between upper black regions and lower white regions, relatively large positive values for edges between upper white regions and lower black regions, relatively smaller values if the edges are diagonal and values close to zero if there are no horizontal components to the edges or if there are no edges. The vertical Sobel edge detector of Figure 16B generates relatively large negative values for edges between left-side black regions and right-side white region, relatively large positive values for edges between left-side white regions and right-side black regions, relatively smaller values if the edges are diagonal and values close to zero if there are no vertical components to the edges or if there are no edges.

The relationship between the results of the horizontal and vertical Sobel edge detectors is then examined. The general orientation of an edge is then determined and placed in one of nine (9) orientation bins. The orientations represented by the nine bins are as follows:

1) 0
2) 0 - ($\pi$/4)
3) ($\pi$/4)-($\pi$/2)
4) ($\pi$/2)-($\pi$/4))
5) (3$\pi$/4)-($\pi$)
6) ($\pi$)-(5$\pi$/4)
7) (5$\pi$/4)-(3$\pi$/2)
8) (3$\pi$/2)-(7$\pi$/4)
9) (7$\pi$/4) - 2n

For example, if the horizontal Sobel edge detector returns a medium-sized positive value and the vertical Sobel edge detector returns a small-sized negative value, it is determined that there is an edge running from top-left to bottom-right at a low grade dividing black on bottom from white on top. This edge is classified as an angle between 7$\pi$/4 and 2$\pi$, and is thus placed in the ninth bin.

The edge magnitudes arc then determined for the pixels of the candidate character using the following formula:

$$edgemagnitude = \sqrt{v^2 + h^2},$$

where $v$ is the value resulting from application of the vertical Sobel edge detector and $h$ is the value resulting from application of the horizontal Sobel edge detector. The edge magnitudes are similarly allocated to one of nine (9) bins.

The edge orientations and edge magnitudes for the pixels are then totaled within each pixel block. By aggregating the edge orientations and edge magnitudes by pixel blocks, the amount of data inputted into the neural network for processing is reduced without significantly deteriorating performance.

The neural network in this embodiment is a feed-forward, multi-layer perceptron that is composed of three (3) layers, namely one input layer, one hidden layer and one output layer, with 288 (4*4*9+4*4*9), 40, and 36 nodes, respectively. The neural network is fully connected. To achieve a non-linear property, the sigmoid function of the form below is employed as the activation function:

$$sig(x) = 1 /( 1 + e^{-x})$$

The output of the neural network is within [0,1]. When input data belonging to a class i is presented, the desired output would be 1 for the $i^{th}$ output node, and 0 for the other 35 output nodes.

If the neural network classifies the candidate character with a desired level of confidence at step 320, the character classification ends. Otherwise, the results of the weighted template matching at step 310 are combined with those produced by the neural network at step 320 to determine if the candidate character can be recognized (step 330). During step 330, if both weighted template matching and neural network analysis come to the same character conclusion but with a level of confidence below the desired level of confidence, then the candidate character is deemed to match that particular character. This result is arrived at despite the fact that neither weighted template matching nor neural network analysis alone, are able to classify the candidate character with the desired level of confidence.

Since the processing power and memory of the apparatus 40 may be limited, thereby limiting the size of the character recognition application, weighted template matching is first performed. If the candidate character is not classified with the desired level of confidence using weighted template matching, then neural network analysis is performed. Weighted template matching is designed to be the primary recognition method since it is faster than neural network analysis and occupies less RAM and non-volatile memory.

If neither weighted template matching nor neural network analysis, either alone or in combination, classifies the candidate character, a check is made to determine whether the candidate character represents a zero (0) character with a desired level of confidence (step 340). It has been found that account numbers contain many zeros, thereby emphasizing the importance of recognizing zero characters. During this step, the orientation of the foreground pixels in the candidate character are analyzed. The number zero has two horizontal lines in the top and bottom, and two vertical lines in the left and right. The center part of the character should not contain any foreground pixels that form part of a stroke.

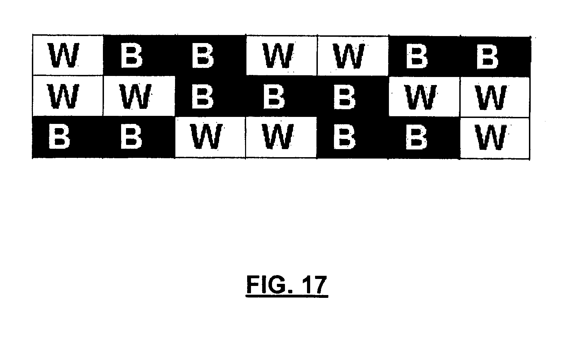

For example, consider the pixel orientation of a horizontal stroke that is three pixels thick as shown in Figure 17. This stroke will not generally qualify as a line if a solid line with length of seven pixels is what is being sought. However, the stroke will qualify as a line in a zero character since there is one black pixel, which has an adjacent black pixel, in every column.

If the candidate character has two horizontal lines and two vertical lines and has an empty center, the candidate character is deemed to be a zero and the character classification ends. If the candidate character is determined not to be a zero, the character is deemed to be a non-zero character that cannot he classified.

The character recognition application may run as a stand-alonc tool or may be incorporated into other available applications to provide enhanced functionality to those applications. The software application may include program modules including routines, programs, object components, data structures etc. and be embodied as computer-readable program code stored on a computer-readable medium. The computer-readable medium is any data storage device that can store data, which can thereafter be read by a computer system. Examples of computer-readable medium include for example read-only memory, random-access memory, hard disk drives, magnetic tape, CD-ROMs and other optical data storage devices. The computer-readable program code can also be distributed over a network including coupled computer systems so that the computer-readable program code is stored and executed in a distributed fashion.

The embodiment described above shows recognition of characters in a cheque image. Those of skill in the art will however appreciate that the character recognition technique may be employed in other applications where it is necessary to recognize characters in images of scanned documents and the like.

Although particular embodiments have been described, those of skill in the art will appreciate that variations and modifications may be made without departing from the spirit and scope thereof as defined by the appended claims.

**Claims**

1. A method of recognizing characters in a document image, comprising:

    examining the intentisity of pixels in said document image;
    identifying a peak intensity deemed to represent foreground in said document image;
    determining a threshold level for distinguishing foreground from background as a function of said identified peak intensity;
    thresholding said document image using said threshold level to identify said foreground; and
    performing character recognition on said identified foreground.

2. The method of claim 1, further comprising:

    examining the intensity of said pixels and identifying a valley intensity following said peak intensity, wherein during said determining said threshold level is calculated as a function of said peak intensity and said valley intensity.

3. The method of claim 2, wherein said threshold level is set to said valley intensity.

4. The method of claim 3, wherein said peak intensity is used to determine a maximum value for said threshold level, said threshold level being set to the lesser of said valley intensity and said maximum value.

5. The method of claim 1, wherein said examining comprises:

    generating a pixel intensity histogram and identifying the first peak intensity therein.

**6.** The method of claim 5, wheren said examining further comprises:

smoothing said intensity histogram to remove intensity oscillations.

**7.** The method of claim 6, wherein said smoothing comprises:

applying a mean filter to said intensity histogram.

**8.** The method of claim 7, further comprising:

examining the intensity of said pixels and identifying a valley intensity following said first peak intensity, wherein during said determining said threshold level is calculated as a function of said first peak intensity and said valley intensity.

**9.** The method of claim 8, wherein said threshold level is sct to said valley intensity.

**10.** The method of claim 9, wherein said first peak intensity is used to determine a maximum value for said threshold level, said threshold level being set to the lesser of said valley intensity and said maximum value.

**11.** The method of claim 1 wherein said character recognition performing comprises at least one of weighted template matching and neural network analysis to identify characters in said foreground.

**12.** The method of claim 10 wherein said character recognition performing comprises at least one of weighted template matching and neural network analysis to identify characters in said foreground.

**13.** The method of claim 5 wherein said threshold level is set to a value between the intensity of said first peak intensity and a subsequent peak intensity.

**14.** The method of claim 13 wherein said first peak intensity is used to determine a maximum value for said threshold.

**15.** The method of claim 1 wherein said character recognition performing comprises the steps of:

clustering proximate groups of pixels in said document image to form candidate characters;
comparing each candidate character to character templates representing recognizable characters and recognizing the candidate character when a match occurs; and
for each candidate character that is not recognized, performing neural network analysis to recognize the candidate character.

**16.** The method of claim 15 further comprising:

for each candidate character that is not recognized following neural network analysis, comparing the results of character template matching and neural network analysis to determine if the combined results, result in recognition of the candidate character.

**17.** The method of claim 15 further comprising:

examining each candidate character to determine if the candidate character meets a character size condition; and
performing the comparing only for each candidate character meeting said character size condition.

**18.** The method of claim 16 further comprising examining the candidate character to determine if the candidate character represents a zero character if the combined results of character template matching and neural network analysis do not result in the candidate character being recognized.

**19.** An apparatus for recognizing characters in a document image, comprising:

an image analyzer examining the intensity of pixels in said document image and identifying a peak intensity deemed to represent foreground;
a thresholder determining a threshold level for distinguishing foreground from background in said document image as a function of said identified peak intensity, and thresholding said document image using said threshold level to identify said foreground; and
a character classifier performing character recognition on said foreground of said document image.

20. An apparatus according to claim 19, wherein said image analyzer identifyies a valley intensity following said identified peak intensity, and wherein said thresholder determines said threshold level as a function of said identified peak intensity and said valley intensity.

21. An apparatus according to claim 20, wherein said image analyzer generates an intensity histogram that is examined to identify said peak intensity and valley intensity.

22. A computer-readable medium embodying a computer program for recognizing characters in a document image, said computer program comprising:

computer program code for examing the intensity of pixels in said document image;
computer program code for identifying a peak intensity deemed to represent foreground in said document image;
computer program code for determining a threshold level for distinguishing foreground from background in said document image as a function of said identified peak intensity;
computer program code for thresholding said document image using said threshold level to identify said foreground; and
computer program code for performing character recognition on said foreground of said document image.

23. A method of recognizing a candidate character in a document image, comprising:

determining edge orientations and edge magnitudes of pixels in regions encompassing pixels of said candidate character; and
analyzing said edge orientations and said edge magnitudes using a classification tool thereby to recognize said candidate character.

24. The method of claim 23, wherein said classification tool is a neural network.

25. The method according to claim 24, further comprising:

dividing the pixels forming said candidate character into regions; and
aggregating said edge orientations within said regions prior to said analyzing.

26. The method according to claim 25, further comprising:

aggregating said edge magnitudes within said regions prior to said analyzing.

27. The method of claim 26, wherein the edge orientations are determined using horizontal and vertical edge detectors.

28. An apparatus for recognizing a candidate character in a document image, comprising:

an image analyzer determining edge orientations and edge magnitudes of pixels in regions encompassing pixels of said candidate character; and
a classification tool analyzing said edge orientations and said edge magnitudes in said document image thereby to recognize characters in said document image.

29. An apparatus according to claim 28, wherein said classification tool is a neural network.

30. An apparatus according to claim 29, wherein said image analyzer divides the pixels forming said candidate characters into regions, and aggregates said edge orientations within said regions prior to processing by said neural network.

31. An apparatus according to claim 30, wherein said image analyzer aggregates said edge magnitudes within said regions prior to processing by said neural network.

32. A computer-readable medium including a computer program for recognizing a candidate character in a document image, said computer program comprising:

computer program code for determining edge orientations of pixels in windows surrounding pixels of said candidate character;

computer program code for determining edge magnitudes of pixels in windows surrounding pixels of said candidate character; and

computer program code for analyzing said edge orientations and said edge magnitudes using a classification tool thereby to recognize said candidate character.

AÆBCDEFGHIJKLMN
OØPQRSTUVWXYZ
abcdefghijklmn
opqrstuvwxyz
0123456789$£¥#
ÄÅÑÖÜ

**FIG. 1A**

AÆBCDEFGHIIJJKLMN
OØPQRSTUVWXYZ
aæbcdefghiijjklmn
oøpqrsßtuvwxyz
0123456789$£¥#
ÄÅ∂ÑÖÜ

**FIG. 1B**

ABCDEFGHIJKLM
NOPQRSTUVWXYZ
0123456789 -

**FIG. 2A**

ABCDEFGHIJKLM
NOPQRSTUVWXYZ
0123456789 -

**FIG. 2B**

**20**
**24**

PLEASE RETURN THIS PORTION OF BILL WITH YOUR PAYMENT

30400999944595D00000000326800000000005

PAY THIS
AMOUNT

32.68

**32**    **36**    **34**

**FIG. 3**

**FIG. 4**

**FIG. 5**

W = white pixel
B = black pixel
D = any pixel

**FIG. 6**

```
┌─────────────────────┐
│  Register Intensities Of  │ ──── 162
│  Pixels And Generate    │
│  Histogram            │
└─────────────────────┘
          │                           160
          ▼
┌─────────────────────┐
│  Use Mean Filter To    │ ──── 164
│  Smooth Curve Of       │
│  Histogram            │
└─────────────────────┘
          │
          ▼
┌─────────────────────┐
│  Locate First Peak     │ ──── 166
└─────────────────────┘
          │
          ▼
┌─────────────────────┐
│  Locate First Valley    │ ──── 168
└─────────────────────┘
          │
          ▼
┌─────────────────────┐
│  Determine Maximum     │ ──── 170
│  Threshold Based On    │
│  Location Of First Peak │
└─────────────────────┘
          │
          ▼
┌─────────────────────┐
│  Determine Threshold   │ ──── 172
└─────────────────────┘
          │
          ▼
┌─────────────────────┐
│  Threshold Image      │ ──── 174
└─────────────────────┘
```

## FIG. 7

FIG. 8

P vs V$_{max}$

**FIG. 9**

_180_

Set Skew Offset To -2
Degrees — 182

Generate Y-Histogram — 184

190

Adjust Skew Offset By
0.2 Degrees

Determine Y-Histogram Width — 186

Is Skew Offset 2
Degrees? — 188

No

Yes

Determine Most Narrow
Y-Histogram — 192

END

## Fig. 10

Y - Histogram          Image Foreground Region

## FIG. 11

**Fig. 12A**

**Fig. 12B**

**Fig. 12C**

From Step 234

Bounding Box
Meets Vertical Bar
Size Condition? — 280

To Step 230 ← N

↓

Pixel Component
Within 2nd Threshold
Distance? — 284

N ← Proximal
Pixel Component
Exists? — 282

286 — Unrecognizable Character

Y

To Step 232

N →

Enter In Character List — 288

To Step 232

Determine Bounding Box — 290

Y ↓

293 — Discard Pixel Component

Bounding
Box Size
< Threshold? — 292

Y →

N ↓

Bounding Box
Meets Vertical Bar
Size Condition? — 294

N → To Step 284

N ↓

Pixel Component
Within 2nd Threshold
Distance? — 298

N ← Proximal Pixel
Component Exists? — 296

300 — Unrecognizable Character

Y

To Step 232

N ↓

Enter In Character List — 302

Y ↓

Repeat Steps 290 to 294
and 298 to 302 — 304

To Step 232

**Fig. 12D**

**310**

Weighted Template Matching With Desired Level Of Confidence?  — Yes

No

**320**

Neural Net Matching With Desired Level Of Confidence? — Yes

No

**330**

Combined Match With Desired Level Of Confidence? — Yes

No

**340**

Zero Match With Desired Level Of Confidence? — Yes

No

END

## FIG. 13

**FIG. 14A**  **FIG. 14B**  **FIG. 14C**

**FIG. 15A**  **FIG. 15B**

| -1 | -2 | -1 |
|----|----|----|
| 0  | 0  | 0  |
| 1  | 2  | 1  |

**<u>FIG. 16A</u>**

| -1 | 0 | 1 |
|----|---|---|
| -2 | 0 | 2 |
| -1 | 0 | 1 |

**<u>FIG. 16B</u>**

| W | B | B | W | W | B | B |
|---|---|---|---|---|---|---|
| W | W | B | B | B | W | W |
| B | B | W | W | B | B | W |

## FIG. 17

## REFERENCES CITED IN THE DESCRIPTION

**Patent documents cited in the description**

- US 4259661 A
- US 5081690 A, Tan
- US 5091968 A, Higgins
- US 6577762 B, Seeger
- US 6807304 B, Loce
- US 4468809 A, Grabowski